(19) Europäisches Patentamt
European Patent Office
Office européen des brevets

(11) **EP 2 239 914 A1**

(12) **EUROPEAN PATENT APPLICATION**

(43) Date of publication:
**13.10.2010 Bulletin 2010/41**

(51) Int Cl.:
**H04L 27/36** (2006.01)

(21) Application number: **10158999.2**

(22) Date of filing: **01.04.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **10.04.2009 IT MI20090597**

(71) Applicant: **SIAE Microelettronica S.p.A.
20093 Cologno Monzese (MI) (IT)**

(72) Inventor: **Salvaneschi, Cesare
20093, Cologno Monzese (IT)**

(74) Representative: **Raimondi, Margherita
Dott. Ing. Prof. Alfredo Raimondi S.r.l.,
Piazzale Cadorna, 15
20123 Milano (IT)**

(54) **Method and associated device for processing digital signals for quadrature amplitude modulation**

(57)    Device for processing digital signals having at its input two respective pairs ($I_{113}/Q_{113}$, $I_{123}/Q_{123}$) of components of two digital flows ($D_{112}$, $D_{122}$) with the same symbol frequency ($f_{simb}$), **characterized in that** it comprises processing means (200), to the input of which said two pairs of signal components ($I_{113}/Q_{113}, I_{123}/Q_{123}$) are supplied, said means (200) comprising:
- a first stage (210) which has at least four adder circuits ($A_{211}, A_{212}, A_{213}, A_{214}$),
- a second stage (220) which has at least four multiplier circuits ($M_{211}, M_{212}, M_{213}, M_{214}$) and
- a third stage (230) which has at least two adder circuits ($A_{231}, A_{232}$),
said processing means (200) being able to output a pair of digital signals ($I_{200}, Q_{200}$) containing the same information as the components ($I_{113}/Q_{11}, I_{123}/Q_{123}$) of the input signals.

Fig. 3

**Description**

The present invention relates to a method and an associated device for processing components of pairs of digital signal flows, originating from independent sources, for transmission thereof by means of phase quadrature amplitude modulation (QAM) via digital radio relay.

It is known in the technical sector relating to the transmission of signals via digital radio relay using quadrature amplitude modulation (QAM) that the transmission devices normally comprise a base-band circuit for each individual transmission channel, a quadrature amplitude (QAM) modulator and a radiofrequency transmitter (TX). The base-band circuit performs the series-parallel conversion of the source digital signal and breaks down the said signal into two other signals, which are conventionally indicated by I and Q and each of which comprises a part of the information contained in the original digital signal. The two signals, I and Q, are sent as modulating signals to the QAM modulator which modulates two carriers at the same frequency $(f_c)$, but in phase quadrature, i.e. in accordance with the time functions of the type cos $\omega_c t$ and sen $\omega_c t$, respectively, and hence the sum; the equation of a signal S output by a QAM modulator is therefore written as the sum of two quadrature components

$$S = I \cos \omega_c t + Q \sin \omega_c t$$

where S, I and Q are functions of the time t and $\omega_c$ is the pulsation corresponding to the frequency $f_c$ of the carriers.

This signal, output by the modulator, is sent to the radio transmitter for transmission to the receiver. Depending on the frequency of the radio relay, the required transmission capacity of the source digital signal and the technology chosen, the signal output by the QAM modulator may be generated at an intermediate frequency instead of at the radio-relay transmission frequency. In this case a further frequency conversion to the radio channel frequency is necessary before transmission. Since the chain of the aforementioned components (base-band module, QAM modulator and TX radio transmitter) is necessary for each digital data flow, it is required to add corresponding further chains complete with components which occupy the associated radiofrequency spectra and channels, should it be required to transmit further digital data flows.

In view of the growing need for transmission of digital signals via radio relay it is becoming increasingly necessary to optimize the transmission systems with a reduction in the costs and greater reliability, the technical problem therefore arising of transmitting several srouce flows of digital signals with a simultaneous reduction in the complexity and the cost of the circuit components of the digital radio-relay systems.

In connection with this problem it is also required that the transmission systems should be designed with small dimensions, be easy and inexpensive to produce and assemble and be able to be installed easily on the antennae of the radio relays using normal standardized means.

These results are achieved according to the present invention by a processing method according to Claim 1, a modulation processing device according to Claim 9, a modulation apparatus according to Claim 24 and a radio-relay transmission system according to Claim 31.

Further details may be obtained from the following description of a non-limiting example of embodiment of the subject of the present invention provided with reference to the accompanying drawings in which:

Figure 1   is a block diagram of a system according to the present invention for radio-relay transmission with an analog QAM modulator;

Figure 2   is a block diagram of a processing circuit according to the present invention;

Figure 3   is a block diagram of a system according to the present invention for radio-relay transmission with a digital QAM modulator.

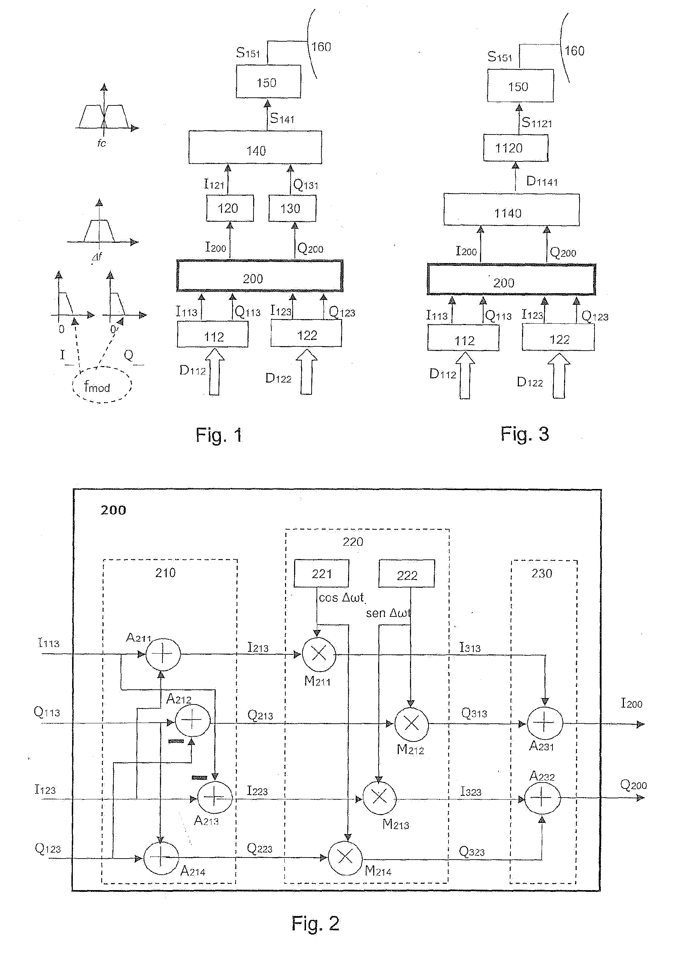

As shown in Fig. 1 which also includes basic spectrum analyser representations of the outputs of the various blocks, a first embodiment of a transmission system according to the present invention with analog QAM modulator comprises two base-band modules, 112 and 122, each of which receives at its input a respective digital flow $D_{112}$ and $D_{122}$, with the same symbol frequency (fsimb), and, operating in a conventional manner, provides at its output a pair of digital components $I_{113}/Q_{113}$ and $I_{123}/Q_{123}$ of the respective digital flow $D_{112}$ and $D_{122}$. The two pairs of components, $I_{113}/Q_{113}$ and $I_{123}/Q_{123}$, are sent to the input of a processing circuit 200 which suitably combines them again and produces at its output single pair of digital signals $I_{200}/Q_{200}$, containing overall the information of both pairs of input signals, derived from the digital flows $D_{112}$ and $D_{122}$.

As shown in detail in Fig. 2, the processing circuit 200 comprises a first stage 210 of adders, a second stage 220 of multipliers and a third stage 230 of adders.

The two pairs of signals $I_{113}/Q_{113}$ and $I_{123}/Q_{123}$, output by the respective base-band module 112 and 122, are sent in pairs to the four adder circuits $A_{211}$, $A_{212}$, $A_{213}$, $A_{214}$ of the first stage 210 of the processing circuit 200. In particular, in $A_{211}$ the signals $I_{113}$ and $I_{123}$ are added, in $A_{212}$ the difference between the signals $Q_{113}$ and $Q_{123}$ is determined, in $A_{213}$ the difference between the signals $I_{123}$ and $I_{113}$ is determined and in $A_{214}$ the signals $Q_{113}$ and $Q_{123}$ are added together.

Therefore the following four sum/difference signals are generated:

$$I_{213} = I_{113} + I_{123};$$

$$Q_{213} = Q_{113} - Q_{123};$$

$$I_{223} = I_{123} - I_{113};$$

$$Q_{223} = Q_{113} + Q_{123}.$$

These four signals $I_{213}$, $Q_{213}$, $I_{223}$ and $Q_{223}$ are, in turn, sent to four respective multiplier circuits $M_{211}$, $M_{212}$, $M_{213}$, $M_{214}$ of the second multiplier stage 220 of the processing circuit 200.

The signal $I_{213}$ is multiplied in $M_{211}$ by the multiplication factor cos $\Delta\omega t$, the signal $Q_{213}$ is multiplied by sen $\Delta\omega t$ in $M_{212}$, the signal $I_{223}$ is multiplied by sen $\Delta\omega t$ in $M_{213}$ and the signal $Q_{223}$ is multiplied by cos $\Delta\omega t$ in $M_{214}$.

A further four signals $I_{313}$, $Q_{313}$, $I_{323}$, $Q_{323}$ are thus generated as described in detail below:

$$I_{313} = I_{213} \cos \Delta\omega t$$

$$Q_{313} = Q_{213} \operatorname{sen} \Delta\omega t$$

$$I_{323} = I_{223} \operatorname{sen} \Delta\omega t$$

$$Q_{323} = Q_{223} \cos \Delta\omega t,$$

where $\Delta\omega$ is equal to $2\pi\Delta f$, $2\Delta f$ being the frequency distance which is to be established between the two end spectra in the frequency band in which the radio relay operates.

The multiplication factors, cos $\Delta\omega t$ and sen $\Delta\omega t$, are contained in two static memory devices 221 and 222, respectively, and represent the samples of a cosinusoid and a pulsation sinusoid $\Delta\omega$. The number of said samples is determined bearing in mind that, if the signal $I_{113}$ has a symbol frequency $f_{simb}$, its band is limited to a modulating frequency fmod =(fsimb/2)*(1+rolloff), where the roll-off parameter conventionally defines the characteristics of the filtering required.

The four signals $I_{313}$, $Q_{313}$, $I_{323}$ and $Q_{323}$ are added in pairs in the third stage 230 of the processing circuit 200; in particular $I_{313}$, $Q_{313}$ are added in the adder $A_{231}$ and $I_{323}$, $Q_{323}$ are added in the adder $A_{232}$, generating the two signals

$$I_{200} = I_{313} + Q_{313}$$

$$Q_{200} = I_{323} + Q_{323}$$

output from the processing circuit 200.

From the detailed description of the processing circuit 200 it can be seen that the two output signals, $I_{200}$ and $Q_{200}$, may be expressed as the combination of the signals $I_{113}/Q_{113}$ and $I_{123}/Q_{123}$ input into the said processing circuit 200 in the following manner:

$$I_{200} = (I_{113} + I_{123})\cos \Delta\omega t + (Q_{113} - Q_{123})\text{sen } \Delta\omega t$$

$$Q_{200} = (Q_{113} + Q_{123})\cos \Delta\omega t + (I_{123} - I_{113})\text{sen } \Delta\omega t.$$

The two signals, $I_{200}$ and $Q_{200}$, are the new modulating signals according to the present invention to be used in order to obtain a suppressed carrier quadrature modulated signal according to conventional methods.

In the case of analog QAM modulation, the two new digital modulating signals $I_{200}$ and $Q_{200}$ are converted into analog signals by means of a respective D/A converter, 120 and 130, at the output of which the signals $I_{121}$ and $Q_{131}$ are obtained.

The two analog signals output, $I_{121}$ and $Q_{131}$, are sent to a conventional QAM modulator 140, with a carrier of frequency $f_c$, or with a pulsation $\omega_c$, which generates a signal $S_{141}$ at its output.

$$S_{141} = I_{121} \cos \omega_c t - Q_{131} \text{sen } \omega_c t.$$

Tests have shown that the two signals $I_{200}$ and $Q_{200}$ generated by the processing circuit 200 and, after D/A conversion, sent to the input of a conventional analog QAM modulator, produce, at the output thereof, a signal $S_{141}$ which is spectrally equivalent to the sum signal of two signals modulated using the conventional technique of two separate chains, each composed of a base-band module, two D/A converters and a QAM modulator having at their input the same source digital signals $D_{112}$ and $D_{122}$; in other words, the modulated signal is spectrally equivalent to the overall spectrum produced by two independent transmitters which each produce a respective spectrum at a distance of $2\Delta f$ from the other one and originating from each signal $D_{112}, D_{122}$.

Said signal $S_{141}$ is sent to the input of the radio-relay transmission module 150 which generates at its output the radio signal $S_{151}$ which is sent to the antenna 160 so as to be transmitted to the receiving station.

As illustrated in Figure 3, a second embodiment of the apparatus according to the present invention comprises a digital QAM modulator 1140 in which modulation is performed by calculating the product of the digital signals $I_{200}$ e $Q_{200}$, sent directly to the input of the modulator 1140, and the samples of the pulsation carrier $\omega_c$, which are stored in a static memory of the said modulator. In this case the digital modulator outputs a signal which is still digital $D_{1141}$ and which undergoes D/A conversion by means of a single converter 1120 located downstream of the QAM modulator. The analog signal $S_{1121}$ output by said D/A converter is sent to the input of the radio transmitter 150.

The present invention also relates to a method for the modulation and transmission via radio relay of two source digital signals $D_{111}$ and $D_{121}$, which comprises the following steps:

A) Acquiring at the input two base-band digital signals $D_{112}, D_{122}$;
B) sending each of the two digital signals $D_{112}, D_{122}$ to the input of a respective conventional base-band module 112, 122;
C) Series-parallel conversion of each digital signal in the respective base-band modules;
D) breaking down each converted signal into two parts, conventionally indicated by I and Q, and generating two pairs of components of the signals $I_{113}/Q_{113}$, $I_{123}/Q_{123}$ output by the two base-band modules 112, 122 respectively;
E) Sending the two pairs of components of the digital signals $I_{113}/Q_{113}, I_{123}/Q_{123}$ to the input of a processing circuit 200, comprising a first adder stage 210, a second multiplier stage 220, where a series of multiplication coefficients of the type (cos $\Delta\omega t$) and (sen $\Delta\omega t$) have been previously stored in two static memories 221 and 222, respectively, and a third adder stage 230.
F) Sending the first components $I_{113}, I_{123}$ of each signal to a first adder $A_{211}$ of the first stage 210 and generation of a sum signal $I_{213} = I_{113} + I_{123}$ for the said first components;
G) Sending the second components $Q_{113}, Q_{123}$ of each signal to a second adder $A_{212}$ of the first stage 210 and generation of a difference signal $Q_{213} = Q_{113} - Q_{123}$ for said second components;
H) Sending the first components $I_{113}, I_{123}$ of each signal to a third adder $A_{213}$ of the first stage 210 and generation of a difference signal $I_{223} = I_{123} - I_{113}$ for said first components;

I) Sending the second components $Q_{113}, Q_{123}$ of each signal to a fourth adder $A_{214}$ of the first stage 210 and generation of a sum signal $Q_{223} = Q_{113} + Q_{123}$ for said second components;

J) Sending the sum signal $I_{213}$ for the first components to a first multiplier $M_{211}$ of the second stage 220 and multiplication by a factor cos $\Delta\omega t$ and generation of a product signal $I_{313} = I_{213}$ cos $\Delta\omega t$;

K) Sending the difference signal $Q_{213}$ for the second components to a second multiplier $M_{212}$ of the second stage 220 and multiplication by a factor sen $\Delta\omega t$ with generation of a product signal $Q_{313} = Q_{213}$ sen $\Delta\omega t$;

L) Sending the difference signal $I_{223}$ for the first components to a third multiplier $M_{213}$ of the second stage 220 and multiplication by a factor sen $\Delta\omega t$ with generation of a product signal $I_{323} = I_{223}$ sen $\Delta\omega t$;

M) Sending the sum signal $Q_{223}$ for the second components to a fourth multiplier $M_{214}$ of the second stage 220 and multiplication by a factor cos $\Delta\omega t$ with generation of a product signal $Q_{323} = Q_{223}$ cos $\Delta\omega t$;

N) Sending the two product signals $I_{313}, Q_{313}$ to a first adder $A_{231}$ of the third stage 230 and generation at the output of the processing circuit 200 of a sum signal

$$I_{200} = I_{313} + Q_{313},$$

such that

$$I_{200} = (I_{113} + I_{123}) \cos \Delta\omega t + (Q_{113} - Q_{123}) \operatorname{sen} \Delta\omega t$$

O) Sending the two product signals $I_{323}, Q_{323}$ to a second adder $A_{232}$ of the third stage 230 and generation at the output of the processing circuit 200 of a sum signal

$$Q_{200} = I_{323} + Q_{323},$$

such that

$$Q_{200} = (Q_{113} + Q_{123}) \cos \Delta\omega t + (I_{123} - I_{113}) \operatorname{sen} \Delta\omega t$$

P) Sending the digital signals $I_{200}, Q_{200}$ to a respective D/A converter 120,130 and generation of the corresponding analog signals $I_{121}, Q_{131}$;

Q) Sending the pair of signals $I_{121}, Q_{131}$ to the input of a conventional QAM modulator 140. In the said modulator the two signals $I_{121}$ and $Q_{131}$ amplitude modulate two carriers at a frequency $f_c$ (pulsation $\omega_c$) in phase quadrature, generating at the output of the QAM modulator the signal

$$S_{141} = I_{121} \cos \omega_c t - Q_{131} \operatorname{sen} \omega_c t$$

R) Sending the signal $S_{141}$ to the radio transmission module 150 which generates the radio frequency signal $S_{151}$ and sends it to the antenna 160 for transmission to the receiving station.

It is therefore clear how, with the method and the associated processing circuit 200 according to the present invention, it is possible to compact the information of two pairs of components of digital signals $I_{113}/Q_{113}$ and $I_{123}/Q_{123}$ output by two base-band modules 112 and 122, in a single pair of digital modulating signals $I_{200}/Q_{200}$ such that, after D/A conversion and being sent to the input of a phase quadrature amplitude QAM modulator, they produce, at the output thereof, a signal modulated about a suppressed carrier of frequency fc which, in terms of information and channelling content, is equivalent to that which would have been generated using the conventional technique by sending each of the two pairs of signals $I_{113}/Q_{113}$ and $I_{123}/Q_{123}$ to a respective QAM modulator with carriers having respectively a frequency of fc-$\Delta$f and fc+$\Delta$f, from which it is emitted with the same spectrum.

With the said processing circuit according to the present invention it is therefore possible to use a single QAM modulator and a single radio-relay transmitter in order to transmit the two pairs of digital components $I_{113}/Q_{113}$ and $I_{123}/Q_{123}$, instead of two QAM demodulators with associated four D/A converters, as required by conventional technology. Since the said processing circuit is even simpler in terms of the circuitry of a QAM modulator and is formed by calculation devices normally already used in the digital processing of signals, these solutions offers considerable advantages from the point of view of costs, simplicity and reliability of the industrialization process which is no longer of a critical nature and uses conventional procedures and components.

Although described in connection with certain constructional forms and certain preferred examples of embodiment of the invention, it is understood that the scope of protection of the present patent is defined solely by the following claims.

**Claims**

1. Method for processing at least one pair of digital flows formed by a respective pair of signal components ($I_{113}/Q_{113}$, $I_{123}/Q_{123}$), **characterized in that** it comprises the following steps:

   A) Sending the two pairs of components ($I_{113}/Q_{113}, I_{123}/Q_{123}$) of the digital signals to the input of processing means (200) with three stages (210,220,230);
   B) adding together the first components ($I_{113}, I_{123}$) of each pair of input signals with generation of a first sum signal ($I_{213}=I_{113}+I_{123}$) for said first components;
   C) adding together the second components ($Q_{113}, Q_{123}$) of each pair of input signals with generation of a first difference signal ($Q_{213}=Q_{113}-Q_{123}$) for said second components;
   D) adding together the first components ($I_{113}, I_{123}$) of each pair of input signals with generation of a second difference signal ($I_{223}=I_{123}-I_{113}$) for said first components;
   E) adding together the second components ($Q_{113}, Q_{123}$) of each pair of input signals with generation of a second sum signal ($Q_{223}=Q_{113}+Q_{123}$) for said second components;
   F) multiplying the first sum signal ($I_{213}$) for the two first components ($I_{113}, I_{123}$) by a multiplication factor cos $\Delta\omega t$ with generation of a first product signal ($I_{313}=I_{213}*\cos \Delta\omega t$);
   G) multiplying the first difference signal ($Q_{213}$) for the second components ($Q_{113}, Q_{123}$) by a multiplication factor sen $\Delta\omega t$ with generation of a second product signal ($Q_{313}=Q_{213}*\text{sen } \Delta\omega t$);
   H) multiplying the second difference signal ($I_{223}$) for the two first components ($I_{123}, I_{113}$) by a multiplication factor sen $\Delta\omega t$ with generation of a third product signal ($I_{323}=I_{223}*\text{sen } \Delta\omega t$);
   I) multiplying the second sum signal ($Q_{223}$) for the two second components ($Q_{113}, Q_{123}$) by a multiplication factor cos $\Delta\omega t$ with generation of a fourth product signal ($Q_{323}=Q_{223}*\cos \Delta\omega t$);
   J) adding together the first product signal ($I_{313}$) and the second product signal ($Q_{313}$) with generation of a first signal ($I_{200}=I_{313}+Q_{313}$) output by the processing means (200);
   K) adding together the third product signal ($I_{323}$) and the fourth product signal ($Q_{323}$) with generation of a second signal ($Q_{200}=I_{323}+Q_{323}$) output by the processing circuit (200).

2. Method according to Claim 1, **characterized in that** said signals ($I_{200}, Q_{200}$) output by the processing circuit (200) are defined by the combinations:

$$I_{200}=(I_{113}+I_{123})\cos \Delta\omega t + (Q_{113}-Q_{123})\text{sen } \Delta\omega$$

$$Q_{200} =(Q_{113}+Q_{123})\cos \Delta\omega t + (I_{123}-I_{113})\text{sen } \Delta\omega$$

3. Method for quadrature amplitude modulation (QAM) of at least one pair of digital flows ($D_{112}, D_{122}$) comprising the following steps:

   a) sending each one of the two digital flows ($D_{112}, D_{122}$) to the input of a respective base-band module (112,122);
   b) series-parallel conversion of each digital flow in the respective base-band modules and breaking down of each converted signal into two parts, with generation of a first pair of digital components ($I_{113}/Q_{113}$) from the first input flow ($D_{112}$) and a second pair of digital components ($I_{123}/Q_{123}$) from the second input flow ($D_{122}$);

**c)** sending the two pairs of digital components ($I_{113}/Q_{113}$, $I_{123}/Q_{123}$) to the input of processing means (200);
**characterized in that** it comprises:
**d)** a step according to Claim 1 for processing the pairs of components ($I_{113}/Q_{113}$, $I_{123}/Q_{123}$) of each digital flow ($D_{112}$, $D_{122}$).

**4.** Method according to Claim 3, **characterized in that that** the QAM modulation is analog.

**5.** Method according to Claim 4, **characterized in that that** the D/A conversion step is performed upstream of the QAM modulation step.

**6.** Method according to Claim 3, **characterized in that that** the QAM modulation is digital.

**7.** Method according to Claim 6, **characterized in that that** the D/A conversion step is performed downstream of the QAM modulation step.

**8.** Method according to Claim 3, **characterized in that** the signals ($I_{200}$, $Q_{200}$) generated during the processing step are defined by the combinations:

$$I_{200} = (I_{113}+I_{123})\cos \Delta\omega t + (Q_{113}-Q_{123})\operatorname{sen} \Delta\omega t$$

$$Q_{200} = (Q_{113}+Q_{123})\cos \Delta\omega t + (I_{123}-I_{113})\operatorname{sen} \Delta\omega t$$

**9.** Device for processing digital signals having at its input two respective pairs ($I_{113}/Q_{113}$, $I_{123}/Q_{123}$) of components of two digital flows ($D_{112}$, $D_{122}$) with the same symbol frequency (fsimb), **characterized in that** it comprises processing means (200), to the input of which said two pairs of signal components ($I_{113}/Q_{113}$, $I_{123}/Q_{123}$) are supplied, said means (200) comprising:

- a first stage (210) which has at least four adder circuits ($A_{211}$, $A_{212}$, $A_{213}$, $A_{214}$),
- a second stage (220) which has at least four multiplier circuits ($M_{211}$, $M_{212}$, $M_{213}$, $M_{214}$) and
- a third stage (230) which has at least two adder circuits ($A_{231}$, $A_{232}$),

said processing means (200) being able to output a pair of digital signals ($I_{200}$, $Q_{200}$) containing the same information as the components ($I_{113}/Q_{113}$, $I_{123}/Q_{123}$) of the input signals.

**10.** Device according to Claim 9, **characterized in that** said signals ($I_{200}$, $Q_{200}$) output by the processing circuit (200) are defined by the following combinations of input components:

$$I_{200} = (I_{113} + I_{123})\cos \Delta\omega t + (Q_{113} - Q_{123})\operatorname{sen} \Delta\omega t$$

$$Q_{200} = (Q_{113} + Q_{123})\cos \Delta\omega t + (I_{123} - I_{113})\operatorname{sen} \Delta\omega t$$

**11.** Device according to Claim 9, **characterized in that** the first adder circuit ($A_{211}$) of the first stage (210) generates a signal ($I_{213}$) which is the sum of the first components ($I_{113}$, $I_{123}$) of the two input pairs.

**12.** Device according to Claim 9, **characterized in that** the second adder circuit ($A_{212}$) of the first stage (210) generates a signal ($Q_{213}$) for the difference between the second components ($Q_{113}$, $Q_{123}$) of the two input pairs.

**13.** Device according to Claim 9, **characterized in that** the third adder circuit ($A_{213}$) of the first stage (210) generates a signal ($I_{223}$) for the difference between the first components ($I_{123}$, $I_{113}$) of the two input pairs.

**14.** Device according to Claim 9, **characterized in that** the fourth adder circuit ($A_{214}$) of the first stage (210) generates a signal ($Q_{223}$) which is the sum of the second components ($Q_{113}, Q_{123}$) of the two input pairs.

**15.** Device according to Claim 9, **characterized in that** the second stage (220) of the processing circuit (200) comprises a pair of memory registers (221,222) which store internally multiplication coefficients of the signals ($I_{213}, Q_{213}, 1_{223}, Q_{223}$) output by the first stage (210).

**16.** Device according to Claim 15, **characterized in that** the first memory register (221) contains multiplication coefficients of the type cos $\Delta\omega t$.

**17.** Device according to Claim 15, **characterized in that** the second memory register (222) contains multiplication coefficients of the type sen $\Delta\omega t$.

**18.** Device according to Claim 16, **characterized in that** the first multiplier circuit ($M_{211}$) of the second stage (220) of the processing circuit (200) generates a signal ($I_{313}$) which is the product of the sum signal ($I_{213}$) output by the first adder ($A_{211}$) of the first stage (210) and a multiplication factor cos $\Delta\omega t$.

**19.** Device according to Claim 17, **characterized in that** the second multiplier circuit ($M_{212}$) of the second stage (220) of the processing circuit (200) generates a signal ($Q_{313}$) which is the product of the difference signal ($Q_{213}$) output by the second adder ($A_{212}$) of the first stage (210) and a multiplication factor sen $\Delta\omega t$.

**20.** Device according to Claim 17, **characterized in that** the third multiplier circuit ($M_{213}$) of the second stage (220) of the processing circuit (200) generates a signal ($I_{323}$) which is the product of the difference signal ($I_{223}$) output by the third adder ($A_{213}$) of the first stage (210) and a multiplication factor sen $\Delta\omega t$.

**21.** Device according to Claim 16, **characterized in that** the fourth multiplier circuit ($M_{214}$) of the second stage (220) generates a signal ($Q_{323}$) which is the product of the sum signal ($Q_{223}$) output by the fourth adder ($A_{214}$) of the first stage (210) and a multiplication factor cos $\Delta\omega t$.

**22.** Device according to Claims 18 and 19, **characterized in that** the first adder circuit ($A_{231}$) of the third stage (230) generates a first signal ($I_{200}$) output by the processing means (200) which is the sum of the signals ($I_{313}, Q_{313}$) output respectively by the first multiplier ($M_{211}$) and second multiplier ($M_{212}$) of the second stage (220).

**23.** Device according to Claims 20 and 21, **characterized in that** the second adder circuit ($A_{232}$) of the third stage (230) generates a second signal ($Q_{200}$) output by the processing means (200) which is the sum of the signals ($I_{323}, Q_{323}$) output respectively by the third multiplier ($M_{213}$) and fourth multiplier ($M_{214}$) of the second stage (220).

**24.** Apparatus for quadrature amplitude modulation (QAM) of a carrier by means of modulating signals generated by at least one pair of digital flows ($D_{112/}D_{122}$) with the same symbol frequency (fsimb), comprising:

    - a QAM quadrature amplitude modulator (140;1140),
    - two base-band modules (112,122) each having at their input one of the two said digital flows ($D_{112}, D_{122}$) and able to generate a respective pair of digital components ($I_{113/}Q_{113}, I_{123/}Q_{123}$) of said base-band flows ($D_{112}, D_{122}$);
    - at least one D/A converter (1120;120,130),

    **characterized in that** it comprises:

    a processing device (200) according to Claim 9, the input of which is supplied with the two pairs of digital components ($I_{113/}Q_{113}, I_{123/}Q_{123}$) generated at the output by the said base-band modules (112,122) and able to generate a pair of digital output signals ($I_{200}, Q_{200}$) to be sent to the QAM modulator (140;1140) and containing the same information as the digital flows ($D_{112}, D_{122}$).

**25.** Apparatus according to Claim 24, **characterized in that that** said QAM modulator (140) is analog.

**26.** Apparatus according to Claim 25, **characterized in that** it comprises two D/A converters (120,130) arranged upstream of the QAM modulator (140) and able to perform D/A conversion of the two signals output by the processing means (200), generating respective analog signals ($I_{121}, Q_{131}$) sent to the input of the QAM modulator.

**27.** Apparatus according to Claim 26, **characterized in that** the band of each of the signals ($I_{121}$, $Q_{131}$) output by the two D/A converters (120,130) is $f_{mod}$.

**28.** Apparatus according to Claim 24, **characterized in that that** said QAM modulator (140) generates a modulated signal ($S_{141}$) with a spectrum comprising two adjacent bands which are symmetrical with respect to the frequency ($f_c$) of the carrier and which have a channel spacing equal to $2\Delta f$.

**29.** Apparatus according to Claim 24, **characterized in that that** said QAM modulator (1140) is digital and receives at its input the components ($I_{200}$, $Q_{200}$) output by the said processing means and (200) and generates a modulated digital signal ($D_{1141}$).

**30.** Apparatus according to Claim 29, **characterized in that** said at least one D/A converter (1120) is arranged downstream of the QAM modulator (1140) and said D/A converter receives at its input the digital signal ($D_{1141}$) output by the QAM modulator and generates at its output an analog signal ($S_{1121}$) with a spectrum comprising two adjacent bands which are symmetrical with respect to the frequency ($f_c$) of the carrier and with a channel spacing equal to $2\Delta f$.

**31.** System for radio-relay transmission of at least two digital flows ($D_{112}$, $D_{122}$) comprising a radiofrequency transmission module (150), **characterized in that** it comprises an apparatus for quadrature amplitude modulation according to Claim 24.

**32.** System according to Claim 31, **characterized in that** the signal ($S_{141}$; $S_{1121}$) input to the radio transmission module (150) is of the radiofrequency type.

**33.** System according to Claim 31, **characterized in that** the signal ($S_{141}$; $S_{1121}$) input to the radio transmission module (150) is of the intermediate frequency type.

Fig. 1

Fig. 3

Fig. 2

Europäisches
Patentamt

European
Patent Office

Office européen
des brevets

# EUROPEAN SEARCH REPORT

Application Number

EP 10 15 8999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/116145 A1 (SORRELLS DAVID F [US] ET AL) 24 May 2007 (2007-05-24) * paragraphs [0145], [0156], [0159], [0307], [0309] * * figures 16,17 * ----- | 1-33 | INV. H04L27/36 |
| A | US 4 571 549 A (LODS JEAN [FR] ET AL) 18 February 1986 (1986-02-18) * the whole document * ----- | 1-33 | |
| A | EP 1 876 703 A2 (QUALCOMM INC [US]) 9 January 2008 (2008-01-09) * the whole document * ----- | 1-33 | |

TECHNICAL FIELDS
SEARCHED      (IPC)

H04L

The present search report has been drawn up for all claims

| Place of search | Date of completion of the search | Examiner |
|---|---|---|
| Munich | 28 July 2010 | Belloni, Paolo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 15 8999

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2010

| Patent document cited in search report | | Publication date | Patent family member(s) | | Publication date |
|---|---|---|---|---|---|
| US 2007116145 | A1 | 24-05-2007 | US 2008298509 | A1 | 04-12-2008 |
| | | | US 2007133714 | A1 | 14-06-2007 |
| US 4571549 | A | 18-02-1986 | DE 3466844 | D1 | 19-11-1987 |
| | | | EP 0114761 | A1 | 01-08-1984 |
| | | | FR 2539261 | A1 | 13-07-1984 |
| | | | JP 1733749 | C | 17-02-1993 |
| | | | JP 4023862 | B | 23-04-1992 |
| | | | JP 59135958 | A | 04-08-1984 |
| EP 1876703 | A2 | 09-01-2008 | AT 381838 | T | 15-01-2008 |
| | | | AU 1463001 | A | 15-05-2002 |
| | | | CN 1488221 | A | 07-04-2004 |
| | | | DE 60037540 | T2 | 24-12-2008 |
| | | | EP 1330905 | A1 | 30-07-2003 |
| | | | HK 1063546 | A1 | 01-09-2006 |
| | | | JP 2004527927 | T | 09-09-2004 |
| | | | WO 0237787 | A1 | 10-05-2002 |

EPO FORM P0459

For more details about this annex : see Official Journal of the European Patent Office, No. 12/82